# EUROPEAN PATENT SPECIFICATION

(11) **EP 4 246 471 B1**
(45) Date of publication and mention of the grant of the patent: **05.08.2026**
(21) Application number: 23162208.5
(22) Date of filing: 16.03.2023
(51) Int. Cl.: G07D 1/02, G07D 11/60, G07D 11/23, G07D 11/00, G07D 11/34

(54) **MONEY PROCESSING SYSTEM, TERMINAL APPARATUS AND MONEY PROCESSING METHOD**
GELDVERARBEITUNGSSYSTEM, ENDGERÄTEVORRICHTUNG UND GELDVERARBEITUNGSVERFAHREN
SYSTÈME DE TRAITEMENT D'ARGENT, APPAREIL TERMINAL ET PROCÉDÉ DE TRAITEMENT D'ARGENT

(30) Priority: 17.03.2022 JP 2022042958
(43) Date of publication of application: 20.09.2023
(73) Proprietor: GLORY LTD., Himeji-shi Hyogo 670-8567 (JP)
(72) Inventor: KOBAYASHI, Kiyoaki, Himeji-shi, Hyogo, 670-8567 (JP); UMEKI, Hidetaka, Himeji-shi, Hyogo, 670-8567 (JP); NISHIGUCHI, Shinsuke, Himeji-shi, Hyogo, 670-8567 (JP)
(74) Representative: Isarpatent

(56) References cited:
- US-A1- 2018 365 938
- US-A1- 2020 410 826

## Description

### Technical Field

The present disclosure relates to a money processing system, a terminal apparatus and a money processing method.

### Background Art

In the related art, as withdrawal of deposits from bank accounts, withdrawal of cash, i.e., cash-out, from a money processing apparatus such as a change machine is performed in addition to payment by a debit card for items in distribution stores.

For example, PTL 1 discloses a method of performing cash-out for payout of cash from the account balance by using a financial institution card, a cash payment terminal comprising a change dispensing means, and an item identifier for specifying the cash-out amount in a convenience store. Document US 2020/410826 A1 discloses a system of point of sale apparatuses in connection with cash out apparatuses.

### Citation List

### Patent Literature

PTL 1
Japanese Patent Publication No. 4210688

### Summary of Invention

### Technical Problem

In the method disclosed in PTL 1, those who know that cash-out can be made can use the cash-out by taking an item identifier displayed in the store to the check-out counter. However, those who do not know that cash-out can be made, or a person who forgets to take the product identifier from the display area cannot use the cash-out.

The present disclosure relates to a money processing system, a terminal apparatus and a money processing method for supporting the use of cash-out. The scope of the invention is defined by the appended claims.

### Solution to Problem

A money processing system according to an embodiment of the present disclosure comprises: a terminal apparatus configured to receive registration of a price of at least one of an item and service; and a money processing apparatus configured to dispense money. The terminal apparatus displays a screen that indicates that cash-out is enabled when a total amount of the price of which the registration is received is equal to or greater than a first threshold value. The terminal apparatus instructs the money processing apparatus to dispense money when the terminal apparatus receives a request of cash-out.

The terminal apparatus displays the screen when the total amount is equal to or greater than the first threshold value and an inventory amount of the money processing apparatus is equal to or greater than a second threshold value, wherein the second threshold value is obtained by adding a predetermined amount to a maximum amount that is specified by regulations to be withdrawable in a single cash-out.

Upon receiving a command requesting information about the inventory amount of the money processing apparatus from the terminal apparatus, the money processing apparatus may transmit to the terminal apparatus information about an inventory amount stored in a memory provided in the money processing apparatus.

When the terminal apparatus receives a request of cash-out, the terminal apparatus may determine whether an inventory amount of the money processing apparatus is equal to or greater than the second threshold value, and when the inventory amount is equal to or greater than the second threshold value, the terminal apparatus may instruct the money processing apparatus to dispense money.

The terminal apparatus may be configured such that when acquiring a request amount for cash-out, the terminal apparatus displays a combination of denominations that is stored in the money processing apparatus and is equal to the request amount.

The terminal apparatus may be attached to a cart into which an item selected by the customer is placed.

The money processing apparatus may comprise an information input apparatus configured to input information required for performing cash-out, and may be configured to dispense money through cash-out when the information is input from the information input apparatus.

A terminal apparatus according to an embodiment of the present disclosure comprises: a memory configured to store a first threshold value; and a processor configured to compare a total amount of a price of at least one of an item and service and the first threshold value. When the total amount is equal to or greater than the first threshold value, the processor causes a display apparatus to display a screen that indicates that cash-out is enabled. When a request of cash-out is received, the processor instructs a money processing apparatus to dispense money.

The processor causes the display apparatus to display the screen when the total amount is equal to or greater than the first threshold value and an inventory amount of the money processing apparatus is equal to or greater than a second threshold value, wherein the second threshold value is obtained by adding a predetermined amount to a maximum amount that is specified by regulations to be withdrawable in a single cash-out.

A money processing method according to an embodiment of the present disclosure is configured to be executed by a computer, the method comprising: registering a price of at least one of an item and service; calculating a total amount of the price registered; displaying a screen that indicates that cash-out is enabled when the total amount is equal to or greater than a first threshold value; and instructing a money processing apparatus to dispense money when a request for cash-out is received.

The displaying the screen is performed when the total amount is equal to or greater than the first threshold value and an inventory amount of the money processing apparatus is equal to or greater than a second threshold value, wherein the second threshold value is obtained by adding a predetermined amount to a maximum amount that is specified by regulations to be withdrawable in a single cash-out.

### Advantageous Effects of Invention

According to the present disclosure, it is possible to provide a money processing system, a terminal apparatus and a money processing method for supporting the use of cash-out.

### Brief Description of Drawings

FIG. 1 is a schematic view of a money processing system according to a first embodiment;
FIG. 2 is a sequence diagram illustrating an exemplary cash-out;
FIG. 3 is a continuation of FIG. 2;
FIG. 4 illustrates an exemplary cash-out proposal screen;
FIG. 5 illustrates an exemplary cash-out request amount input screen;
FIG. 6 illustrates an exemplary cash-out request amount input screen;
FIG. 7 illustrates an exemplary pattern selection screen;
FIG. 8 is a schematic view of a money processing system according to a second embodiment;
FIG. 9 is a sequence diagram illustrating an exemplary cash-out in a third embodiment;
FIG. 10 is a sequence diagram illustrating an exemplary cash-out of a case where a preliminary registration is performed;
FIG. 11 is a continuation of FIG. 10;
FIG. 12 is a continuation of FIG. 11;
FIG. 13 illustrates an exemplary cash-out selection screen;
FIG. 14 illustrates an exemplary bar code display screen;
FIG. 15 illustrates an exemplary one-time password input screen; and
FIG. 16 illustrates an exemplary personal authentication number input screen.

### Description of Embodiments

### First Embodiment

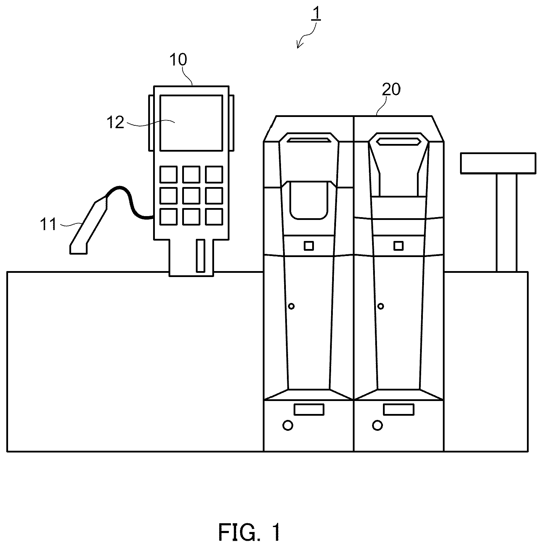

FIG. 1 is a schematic view of a money processing system 1 according to a first embodiment of the present disclosure. The money processing system 1 comprises a terminal apparatus 10 and a money processing apparatus 20 installed at a check-out counter in a distribution store such as a convenience store or a supermarket.

The terminal apparatus 10 is a POS terminal operated by a store clerk, or a self-service terminal (for example, Kiosk terminal) operated by a store customer, for example. In the present embodiment, the terminal apparatus 10 is a self-service terminal.

The terminal apparatus 10 comprises an information input apparatus 11 such as a bar code scanner or a RFID reader. The information input apparatus 11 may be configured such that it can be grabbed and moved by an operator, or may be fixed to the terminal apparatus 10. Note that the bar code as used herein comprises two-dimensional bar codes.

The terminal apparatus 10 comprises a display apparatus 12. The display apparatus 12 is composed of a touch panel, and configured to be able to provide information to the operator of the terminal apparatus 10 by displaying a screen, and receive a request from the operator through a touch operation.

The terminal apparatus 10 comprises a processor such as a CPU and a memory. The processor generally controls the terminal apparatus 10 including the information input apparatus 11 and the display apparatus 12 by executing programs stored in the memory.

Through the customer's operation, information about an item is input from the information input apparatus 11. For example, a bar code printed on the item is scanned. Then, the price of the item is registered in the terminal apparatus 10. That is, the terminal apparatus 10 receives registration of the price of the item. The registered price of the item is displayed on the display apparatus 12 and stored in the memory. The trade name may be registered together with the price, and in this case, the trade name associated with the price is displayed on the display apparatus 12 and stored in the memory. In addition, each time the price is registered in a single transaction (i.e., shopping), the processor calculates the total amount, which is the sum of prices. The calculated total amount is stored in the memory.

Note that the terminal apparatus 10 may receive the registration of the price of the service provided to the customer. For example, the display apparatus 12 may be configured to display options of the service provided to the customer, and receive the registration of the price when the options are touched. Alternatively, the price of the service may be registered by inputting information at the information input apparatus 11 from a tag where a bar code that specifies the service to be provided is printed or a tag containing a RFID chip.

In addition, the service herein is labor or benefit provided in exchange for compensation, for example, in the transportation, food service, or lodging industries, and it may be refueling at gas stations and charging electric vehicles, for example. Further, it may be a request for a courier service or payment of a utility bill.

The terminal apparatus 10 is configured to receive an operation of determining the payment method. More specifically, it is configured to receive the determination operation when a plurality of options of the payment method, such as "pay by cash", "pay by credit card" and "pay by debit card", is displayed on the display apparatus 12 and one of them is touched.

In addition, the memory of the terminal apparatus 10 stores a first threshold value, and the processor is configured to be able to compare the total amount of the registered price with the first threshold value and determine whether the total amount is equal to or greater than the first threshold value. For example, in the case where a minimum purchase amount required for performing (requesting) cash-out is specified by the regulations or the like in the country or region where the money processing system 1 runs, the memory may store the minimum purchase amount as the first threshold value. In addition, the first threshold value may be a value preliminarily set by the operator of the store where the money processing system 1 is installed.

In addition, the memory of the terminal apparatus 10 stores a second threshold value, and the processor is configured to be able to determine whether the total amount is equal to or greater than the second threshold value by comparing the inventory amount of the money processing apparatus 20 with the second threshold value. In an example not falling under the scope of the invention, the second threshold value is a maximum amount that can be withdrawn in a single cash-out specified by the regulations or the like of the country or region where the money processing system 1 runs, for example.

The money processing apparatus 20 is configured to store money inside it, and be able to dispense the stored money. The money processing apparatus 20 is a change machine configured to receive the money as the price of at least one of an item and a service is deposited and dispense change as necessary. The money processing apparatus 20 may be a money changer, a ticket vending machine or a vending machine, for example. In the present embodiment, the money processing apparatus 20 is a change machine. The money processing apparatus 20 may be a combination of a banknote processing apparatus for processing banknotes and a coin processing apparatus for processing coins.

The money processing apparatus 20 comprises a processor such as a CPU and a memory. The processor generally controls the money processing apparatus 20 by executing programs stored in the memory.

The money processing apparatus 20 comprises a recognition unit that recognizes the deposited money. The money processing apparatus 20 is configured to be able to record in the memory the total amount of the money stored in it, i.e., the inventory amount, and the number of the money stored in it for each denomination.

The money processing apparatus 20 may comprise a display that displays information to be provided to the operator.

The terminal apparatus 10 and the money processing apparatus 20 are disposed next to each other, and are connected directly or through a network so as to be able to exchange information. In this manner, a customer as an operator can deposit the money as the price to the money processing apparatus 20 or receive the dispensed money immediately after operating the terminal apparatus 10 or while operating the terminal apparatus 10.

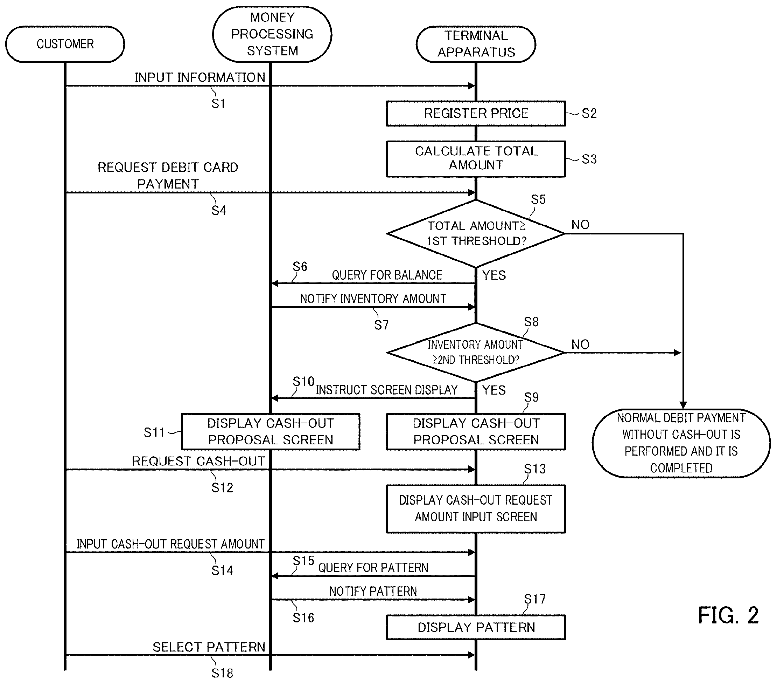

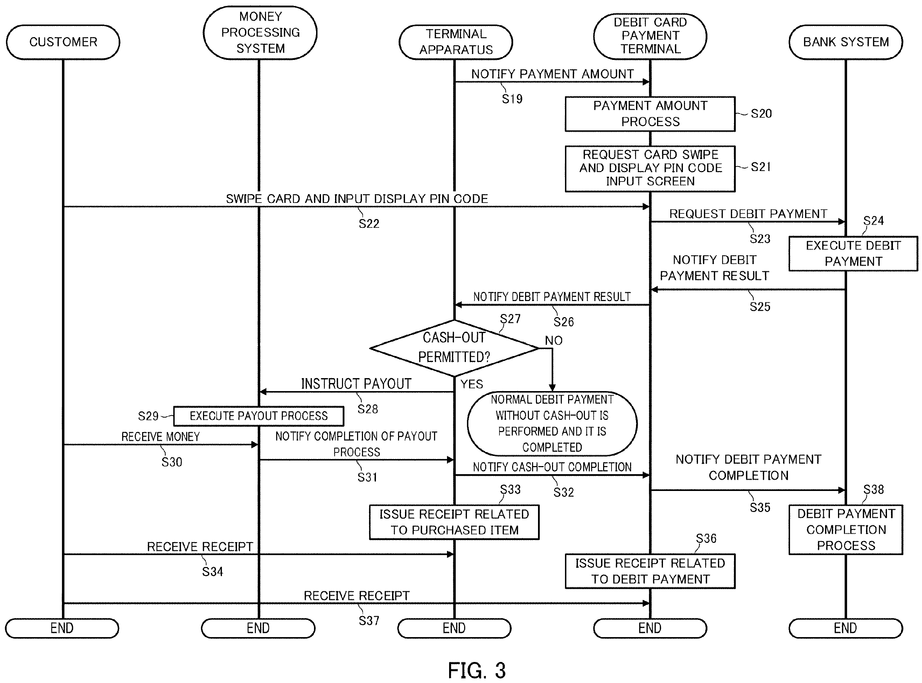

Subsequently, how cash-out and support for cash-out are performed is described with reference to FIGS. 2 and 3. FIGS. 2 and 3 are exemplary sequence diagrams illustrating a procedure of cash-out performed while being supported by the money processing system 1. FIG. 3 is a continuation of FIG. 2.

First, the customer operates the information input apparatus 11 of the terminal apparatus 10 to input information about the item to be purchased to the terminal apparatus 10 (S1). The terminal apparatus 10 registers the price of the item on the basis of the input information (S2). Subsequently, the terminal apparatus 10 calculates the total amount of the registered price (S3).

Next, the customer requests a payment by a debit card (S4). Specifically, for example, the processor causes the display apparatus 12 to display a plurality of options related to the payment method, and the customer performs an operation of touching the option "payment by debit card".

Payment of the price of the item or service by a debit card is one of conditions for performing cash-out. Therefore, when payment by a debit card is requested, the money processing system 1 starts preparation for the support for cash-out.

As the preparation for the support for cash-out, first, the terminal apparatus 10 compares the total amount of the registered price and the first threshold value (S5).

In the case where the total amount is smaller than the first threshold value (S5 No), the cash-out cannot be performed due to the limitation of the regulations and the like in the country or region where the money processing system 1 runs, or the restriction of the operator of the store where the money processing system 1 is installed. Therefore, a normal debit payment without cash-out is performed, and the procedure is completed. In this case, the money processing system 1 can indirectly support the implementation of appropriate cash-out by preventing the cash-out against the regulations and the like or the wishes of the operator of the store.

On the other hand, when the total amount is equal to or greater than the first threshold value (S5 Yes), the terminal apparatus 10 queries the money processing apparatus 20 for the inventory amount (S6). More specifically, the terminal apparatus 10 transmits, to the money processing apparatus 20, a command requesting information about the inventory amount of the money processing apparatus 20. Upon receiving the inquiry, the money processing apparatus 20 notifies the terminal apparatus 10 of the inventory amount stored in the memory of the money processing apparatus 20 (S7).

Upon receiving the notification of the inventory amount from the money processing apparatus 20, the terminal apparatus 10 compares the inventory amount of the money processing apparatus 20 and the second threshold value (S8).

When the inventory amount is smaller than the second threshold value (S8 No), the cash-out may not possibility performed. Therefore, a normal debit payment without cash-out is performed, and the procedure is completed. In this case, the money processing system 1 can indirectly support the implementation of appropriate cash-out by preventing the request of the cash-out of the amount that cannot be performed. Note that the second threshold value is an amount obtained by adding a predetermined amount to the maximum amount that is specified by the regulations or the like to be withdrawable in a single cash-out. By using the amount to which a predetermined amount is added, the money equal to or greater than the added amount always remains in the money processing apparatus 20 even when the maximum amount of the money that can be withdrawn in a single cash-out is dispensed from the money processing apparatus 20. Thus, the payout of change and the like can be reliably continued.

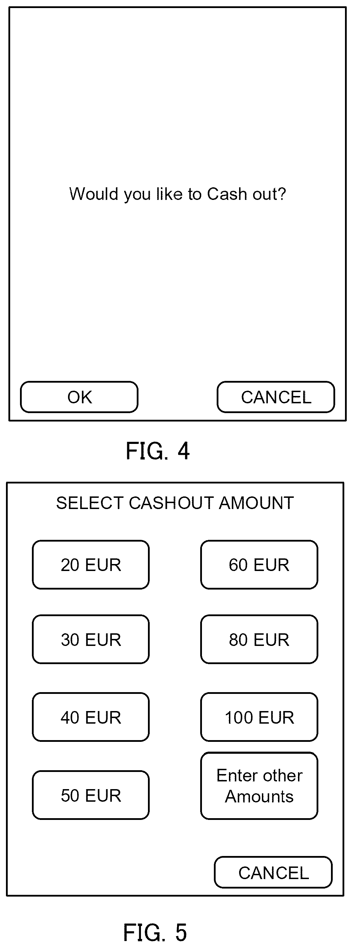

On the other hand, when the inventory amount is equal to or greater than the second threshold value (S8 Yes), the terminal apparatus 10 displays a cash-out proposal screen on the display apparatus 12 (S9). FIG. 4 illustrates an exemplary cash-out proposal screen. The cash-out proposal screen comprises character strings, icons, and images for notifying that cash-out can be made for the customer, and the like.

Note that in the case where the money processing apparatus 20 comprises a display, the terminal apparatus 10 may transmit, to the money processing apparatus 20, a signal for requesting the display of the cash-out proposal screen (S10). Upon receiving this signal, the money processing apparatus 20 displays the cash-out proposal screen on the display (S11).

As described above, when the total amount of the price is equal to or greater than the first threshold value, and the inventory amount is equal to or greater than the second threshold value, the money processing system 1 displays the cash-out proposal screen on the display apparatus 12 of the terminal apparatus 10 or the display of the money processing apparatus 20. Therefore, in the case where there is no limitation of the regulations and the like in the country or region or no restriction of the operator of the store, and there is a sufficient amount of inventory, the money processing system 1 can make a notification for the execution of cash-out to the customer operating the terminal apparatus 10. That is, the money processing system 1 can support appropriate implementation of cash-out.

In an example not falling under the scope of the invention, the terminal apparatus 10 may display the cash-out proposal screen on the display apparatus 12 without confirming the inventory amount of the money processing apparatus 20. That is, the steps of S6 to S8 illustrated in FIG. 2 may not be performed. Also in this case, at least when there is no limitation of the regulations and the like in the country or region or no restriction of the operator of the store, it is possible to make a notification to the customer.

The customer who desires the cash-out performs an operation of requesting cash-out (S12). The operation of requesting cash-out is an operation of touching a request button (for example, the "OK" button in FIG. 4) in the cash-out proposal screen. Note that the customer who does not desire cash-out performs an operation of not requesting cash-out by touching the unnecessary button (for example, the "CANCEL" button in FIG. 4) in the cash-out proposal screen. When the operation of not requesting cash-out is performed, a normal debit payment will be performed.

When the operation of requesting cash-out is performed, the terminal apparatus 10 displays a cash-out request amount input screen on the display apparatus 12 (S13).

Note that the confirmation of the inventory amount of the money processing apparatus 20 described above (S6 to S8) may be performed after the reception of the operation of requesting cash-out made by the customer (S12) and the display of the cash-out request amount input screen (S13). In this case, when the inventory amount of the money processing apparatus 20 is insufficient, the cash-out request amount input screen is not displayed and a normal debit payment without cash-out is performed even in the case where the customer requests the cash-out.

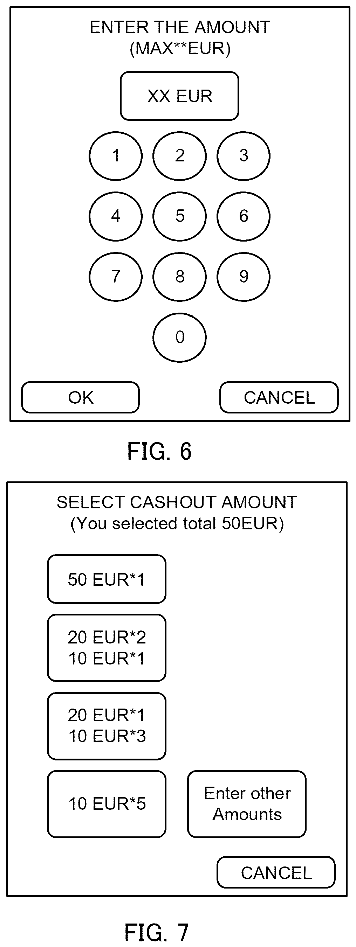

FIGS. 5 and 6 illustrate exemplary cash-out request amount input screens. The cash-out request amount input screen illustrated in FIG. 5 comprises an option selection button for selecting one from a plurality of amounts (for example, "20 EUR" and "30 EUR") set in advance as cash-out request amounts. When these option buttons are touched, the amount displayed together with the button is input as a cash-out request amount (S14). In addition, when the button displayed as "Enter other Amounts" is touched, the screen transfers to the cash-out request amount input screen illustrated in FIG. 6. The cash-out request amount input screen illustrated in FIG. 6 comprises numeric-key buttons. The operator can input any cash-out request amounts by operating the numeric-key buttons. Note that when the operation of requesting cash-out is performed, the screen illustrated in FIG. 6 may be displayed without displaying the screen illustrated in FIG. 5.

When the cash-out request amount is input, the terminal apparatus 10 queries the money processing apparatus 20 for the combination pattern of the denominations which is stored in the money processing apparatus 20 and of which the sum of the amounts is the cash-out request amount (S15). More specifically, the terminal apparatus 10 transmits a command requesting information about the combination pattern of the denominations to the money processing apparatus 20. A case where 50 EUR is requested as a cash-out request amount is described below as an example.

Upon receiving the inquiry, the money processing apparatus 20 extracts the combination pattern of the denominations that can make up the cash-out request amount by referring to the stored amount of each denomination stored in the memory of the money processing apparatus 20, and notifies the terminal apparatus 10 of the extracted pattern (S16). For example, when one or more 50 EUR, two or more 20 EUR, and five or more 10 EUR 5 are stored in the money processing apparatus 20, the combination pattern of the denominations that can make up the 50 EUR of the cash-out request amount is the following four patterns.
(1) One 50 EUR
(2) Two 20 EUR and one 10 EUR
(3) One 20 EUR and three 10 EUR
(4) Five 10 EUR

Note that the number of patterns to be notified differs depending on the stored amounts of each denomination in the money processing apparatus 20, and may possibly be one or zero.

Upon receiving the pattern notification, the terminal apparatus 10 displays the notified pattern, and displays a pattern selection screen for receiving an operation of selecting one from among the notified patterns on the display apparatus 12 (S17). FIG. 7 illustrates an exemplary pattern selection screen. The pattern selection screen illustrated in FIG. 7 comprises option buttons for selecting one from one or more patterns notified from the money processing apparatus 20. When these option buttons are touched, the pattern displayed together with the button is selected as the combination of the denominations to be cashed out (S18). Note that for the case where the number of notified patterns is zero and there is no option displayed, and the case where there is no desired combination, the pattern selection screen may comprise a button displayed with "Enter other Amounts". When this button is touched, the display apparatus 12 may display the cash-out request amount input screen illustrated in FIG. 6. In this case, the procedure returns to step S13, and the customer can reenter the cash-out request amount.

As described above, the money processing system 1 can receive not only the cash-out amount requested by the customer, but also the combination pattern of the denominations making up the cash-out amount requested by the customer. Further, as described later, when the customer account balance has no problem, the requested amount is dispensed in the denomination combination received by the money processing system 1. That is, the money processing system 1 can meet the customer's demands and support the implementation of highly satisfactory cash-out.

Upon receiving a pattern selection from the customer, the terminal apparatus 10 notifies the debit card payment terminal of the payment amount as illustrated in FIG. 3 (S19). Note that the debit card payment terminal is an apparatus installed in the store together with the money processing system 1. The debit card payment terminal reads information from the debit card for performing payment by a debit card (i.e., debit payment) and receives an input of a PIN code required for performing debit payment. In addition, the debit card payment terminal communicates with the bank system through a communication network.

Upon receiving a notification of the payment amount from the terminal apparatus 10, the debit card payment terminal executes a normal process regardless of the necessity of cash-out. Specifically, the debit card payment terminal performs a payment amount process (S20), requests a swipe of the debit card, and displays a screen for inputting the PIN code (S21). When a PIN code inputting operation and a debit card swipe operation by the customer are received (S22), the debit card payment terminal makes a request of a debit card payment to the bank system (S23).

The bank system executes debit payment on the basis of the information received from the debit card payment terminal (S24). At this time, when the customer account balance is equal to or greater than the sum of the total amount of the price and the cash-out request amount, the cash-out is permitted.

The bank system notifies the debit card payment terminal of the debit payment result (S25). In addition, the debit card payment terminal notifies the terminal apparatus 10 of the debit payment result received from the bank system (S26).

Upon receiving the debit payment result, the terminal apparatus 10 determines whether the debit payment result permits the cash-out (S27). When the cash-out is not permitted (S27 No), a normal debit payment without cash-out is performed and the procedure is completed.

When the cash-out is permitted (S27 Yes), the terminal apparatus 10 makes a request of payout of the cash-out request amount to the money processing apparatus 20 (S28). At this time, payout in the denomination combination selected by the customer in advance is requested.

The money processing apparatus 20 executes the money payout process in accordance with the request (S29). The customer receives the dispensed money (S30). In addition, after dispensing the money, the money processing apparatus 20 notifies the terminal apparatus 10 of the completion of the payout process (S31).

Upon receiving the completion of the payout process, the terminal apparatus 10 notifies the debit card payment terminal of the completion of the cash-out (S32), and issues a receipt related to the purchase of the item (S33). The customer receives the receipt (S34).

In addition, upon receiving a cash-out completion notification, the debit card payment terminal notifies the bank system of the completion of the debit payment (S35), and issues a receipt related to the debit payment (S36). The customer receives the receipt (S37).

In addition, upon receiving a debit payment completion notification, the bank system performs a debit payment complete process (S38). Thus, the procedure is completed.

Note that in the first embodiment, the terminal apparatus 10 may be a POS terminal. In the case where the terminal apparatus 10 is a POS terminal, the operation performed by the customer on the terminal apparatus 10 in the above-mentioned description is performed by a clerk under instructions of the customer.

In addition, in the money processing system 1 according to the present embodiment, the support for cash-out is substantially performed by the terminal apparatus 10. As such, the terminal apparatus 10 is also a cash-out support apparatus.

### Second Embodiment

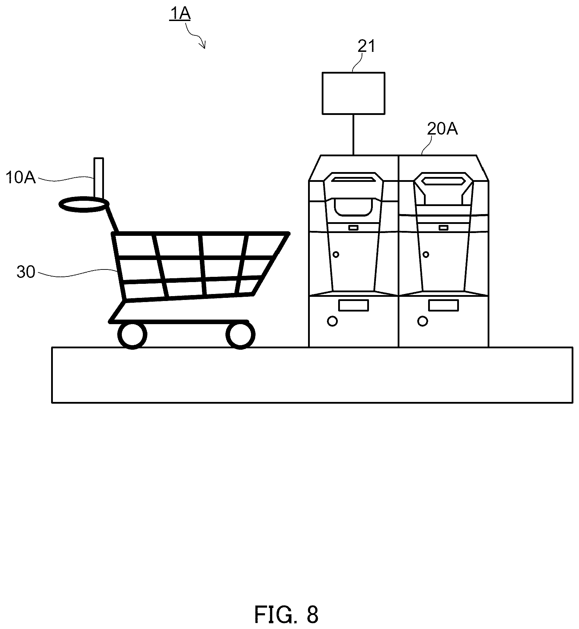

FIG. 8 is a schematic view of a money processing system 1A according to a second embodiment of the present disclosure. The description for the same matter as that of the first embodiment will be omitted.

The money processing system 1A according to the present embodiment is operated in a store where no check-out counter is provided, i.e., a so-called unattended shop. The money processing system 1A according to the present embodiment comprises a terminal apparatus 10A and a money processing apparatus 20A.

The terminal apparatus 10A is attached to a cart 30. The cart 30 is configured to be able to move in the store together with the customer, and receive selected items. In addition, the terminal apparatus 10 has a radio communication function.

The terminal apparatus 10A may be integrated with the cart 30 like an apparatus called smart shopping cart. In addition, it may be a member, like mobile terminals, provided separately from the cart 30 and attached later to the cart 30. In addition, in this case, the terminal apparatus 10A with a mobile terminal format may be able to configured to be placed at the cart 30, or lifted up from the cart 30.

The terminal apparatus 10A is configured to receive the registration of the price of the selected item in linkage with the item selection operation by the customer who selects items while moving in the store. More specifically, the terminal apparatus 10A is configured to read the information from the bar code printed on the item or the tag attached to the item when the item is selected and put into the cart 30, and register the price of the selected item on the basis of the read information. The information may be read from the RFID tag instead of the bar code.

The terminal apparatus 10A is configured to be able to receive from the customer a request of payment by debit card as a payment method at the time of completion of item selection by the customer, or at a preliminary timing (at the start of the use of the cart 30). In addition, the terminal apparatus 10A serves also as the function of the debit card payment terminal.

In addition, the terminal apparatus 10A has a function of providing the customer with information which becomes necessary when the customer who desires the cash-out actually performs cash-out. For example, the terminal apparatus 10A has a printer function of printing a bar code in which information required for performing cash-out is embedded. Alternatively, the terminal apparatus 10A has a function of issuing a one-time password required for performing cash-out. The one-time password may be displayed on the display apparatus provided in the terminal apparatus 10A, or printed by a printer function, or, transmitted to a mobile information apparatus such as a customer's smartphone.

A money processing apparatus 20A is an apparatus that is disposed near the store exit and can perform at least payout of money, for example. The money processing apparatus 20A comprises an information input apparatus 21. The information input apparatus 21 is a bar code reader or a PIN pad, for example.

The terminal apparatus 10A and the money processing apparatus 20A are connected to each other through a network so as to be able to exchange information.

The money processing system 1A according to the present embodiment supports cash-out as follows.

Each time the customer selects an item, the customer inputs information by scanning the bar code of the item with the terminal apparatus 10A, and puts the scanned item into the cart. Then, the terminal apparatus 10A registers the price of the item of which the bar code is scanned.

When the total amount is equal to or greater than the first threshold value and the inventory amount of the money processing apparatus 20A is equal to or greater than the second threshold value at the time point of completion of all registrations of the prices of the items planned to be purchased, the terminal apparatus 10A displays the cash-out proposal screen. In addition, when an operation of requesting cash-out is performed, the combination pattern of the denominations making up the request amount is displayed.

When the pattern is selected and the customer account balance has no problem, the debit payment is completed and the terminal apparatus 10A makes a request of cash-out in the selected pattern to the money processing apparatus 20A.

The customer who desires the cash-out moves to the money processing apparatus 20A, and inputs the information required for performing cash-out to the information input apparatus 21. When the terminal apparatus 10A prints the bar code in which information required for performing cash-out is embedded, the information input apparatus 21 scans the printed bar code. When the terminal apparatus 10A issues the one-time password, the information input apparatus 21 receives the one-time password through the operation of the PIN pad.

When the information required for performing cash-out is appropriately input by the customer, the money processing apparatus 20A dispenses the amount requested by the customer in the selected combination of denominations.

In the money processing system 1 according to the present embodiment, the support for cash-out is substantially performed by the terminal apparatus 10A. As such, the terminal apparatus 10A is also a cash-out support apparatus.

### Third Embodiment

The money processing system 1 according to the first embodiment and the money processing system 1A according to the second embodiment may comprise a server communicatively connected to the terminal apparatuses 10 and 10A and the money processing apparatuses 20 and 20A. The server comprises a processor such as a CPU and a memory. The processor executes programs stored in the memory. The memory of the server stores the first threshold value and the second threshold value.

While the following describes a case where the money processing system 1 according to the first embodiment comprises the server, the cash-out can be supported in the same manner also in the case where the money processing system 1A according to the second embodiment comprises the server.

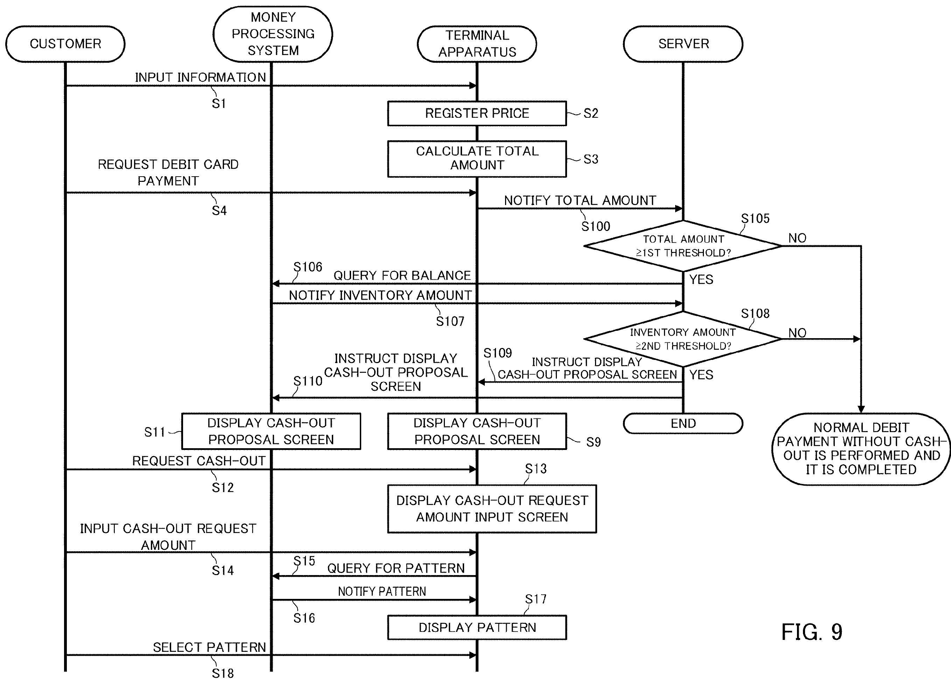

In this case, cash-out support is performed as illustrated in FIG. 9. Note that the same steps as those illustrated in FIG. 2 are denoted with the same reference numerals. Description thereof will be omitted.

Also in the present embodiment, when a request of a payment by a debit card is made (S4), the money processing system 1 starts the preparation for the support for cash-out.

First, the terminal apparatus 10 notifies the server of the calculated total amount (S100). Then, the server compares total amount and the first threshold value (S105).

When the total amount is smaller than the first threshold value (S105 No), a normal debit payment without cash-out is performed, and the procedure is completed.

On the other hand, when the total amount is equal to or greater than the first threshold value (S105 Yes), the server queries the money processing apparatus 20 for the inventory amount (S106). More specifically, the server transmits a command requesting information about the inventory amount of the money processing apparatus 20 to the money processing apparatus 20. Upon receiving the inquiry, the money processing apparatus 20 notifies the server of the inventory amount stored in the memory of the money processing apparatus 20 (S107).

Upon receiving the notification of the inventory amount of the money processing apparatus 20, the server compares the inventory amount of the money processing apparatus 20 and the second threshold value (S108).

When the inventory amount is smaller than the second threshold value (S108 No), a normal debit payment without cash-out is performed, and the procedure is completed.

On the other hand, when the inventory amount is equal to or greater than the second threshold value (S108 Yes), the server makes a request of displaying the cash-out proposal screen on the display apparatus 12 to the terminal apparatus 10 (S109).

Upon receiving the request of displaying the cash-out proposal screen, the terminal apparatus 10 displays the cash-out proposal screen on the display apparatus 12 (S9). In addition, in the case where the money processing apparatus 20 comprises a display, the server may transmit a signal of the request of displaying the cash-out proposal screen to the money processing apparatus 20 (S110).

In the money processing system 1 according to the present embodiment, the operation of storing and updating the first threshold value and the second threshold value is completed by performing it for only one server. Therefore, in the case where a plurality of terminal apparatuses 10 is installed in the store, it is not necessary to perform the operation for each terminal apparatus 10, and thus the operation is simplified. Furthermore, in the case where the operator operates a plurality of stores, it is not necessary to perform the operation for each terminal apparatus 10 installed in each store, and thus the operation is considerably simplified.

In addition, in the money processing system 1 according to the present embodiment, the support for cash-out is substantially performed by the server. As such, the server is also a cash-out support apparatus.

The money processing system pertaining to the present disclosure is not limited to the embodiments described so far, but encompasses those with various modifications to the extent that they do not depart from the scope of the claims.

For example, the money processing system may be configured to not receive the desired combination pattern of the denominations, i.e., not display the combination pattern of the denominations of which the sum of the amounts is the cash-out request amount.

In addition, when the customer determines whether the total amount of the item to be purchased is equal to or greater than the first threshold value, the determination may be made in the following two steps. Specifically, first, it is possible to determine whether the total amount is equal to or greater than the minimum purchase amount that is required for performing cash-out and specified by the regulations or the like in the country or region where the money processing system runs. Thereafter, it is possible to determine whether the total amount is equal to or greater than the value preliminarily set by the operator of the store where the money processing system is installed.

Note that the money processing system may be configured to be able to provide the reservation for cash-out to the customer before arriving at the distribution store.

For example, the money processing system may be linked to cash-out reservation application software installed in the smartphone owned by the customer. The cash-out reservation application software receives the cash-out reservation in following two methods.
(1) Reception of the reservation for the store where cash-out can be performed in a region around the current position.
(2) Reception of the reservation for the store where the cash-out of the desired amount can be performed at the desired date.

These two reservation methods are described below.

### (1) Reception of the reservation for the store where cash-out can be performed in a region around the current position

Upon receiving the operation of requesting cash-out and the request amount from the customer, the cash-out reservation application software acquires the current position of the smartphone by using a location information acquisition function. In addition, the cash-out reservation application software displays on a map the stores where cash-out can be made in a region around the smartphone by using a map API, for example. At this time, the cash-out reservation application software may query the server managing the money processing apparatus for the inventory amount of the money processing apparatus installed in each store and display only stores where the money processing apparatuses with an inventory amount enough to meet the cash-out request amount (for example, an inventory amount equal to or greater than the request amount) are installed.

When the customer performs an operation of selecting a store for cash-out from among the displayed stores, the cash-out reservation application software generates a bar code in which information required for performing cash-out is embedded, and stands by such that it can be displayed at any timing. Thus, the reservation is completed.

### (2) Reception of the reservation for the store where the cash-out of the desired amount can be perform at the desired date

The cash-out reservation application software receives from the customer the operation of requesting cash-out, the desired date for cash-out, and the request amount. At this time, combinations of denominations may be received. When the above-mentioned information is received, the cash-out reservation application software queries the server managing the money processing apparatus for the money processing apparatus that satisfies the condition designated by the customer. Upon receiving a response from the server, the cash-out reservation application software displays on a map the stores where money processing apparatuses that satisfy the designated condition are installed by using a map API, for example.

When the customer performs an operation of selecting the store for cash-out from among the displayed stores, the cash-out reservation application software generates a bar code in which information required for performing cash-out is embedded, and stands by such that it can be displayed at any timing. Thus, the reservation is completed.

The customer who completed the reservation through any of the above-mentioned two reservation methods goes to the selected store with a smartphone in a condition to display the barcode, and makes the purchase. At the time of payment, the customer can receive the money through the cash-out by scanning the bar code generated by the cash-out reservation application software with the information input apparatus of the money processing apparatus or the terminal apparatus.

Note that at the time of reservation, the combination pattern of the denominations making up the cash-out request amount may be designated in addition to the cash-out request amount.

In addition, the money processing system may be linked to the cash-out use application software installed in the smartphone owned by the customer. The cash-out use application software is configured to be able to receive the preliminary registration (prestaging) of the cash-out request amount and the combination pattern of the denominations making up the cash-out request amount. Specifically, the cash-out use application software is configured to preliminarily store the cash-out request amount and the combination pattern of the denominations making up the cash-out request amount in the memory of the smartphone such that the information can be provided to the outside as required.

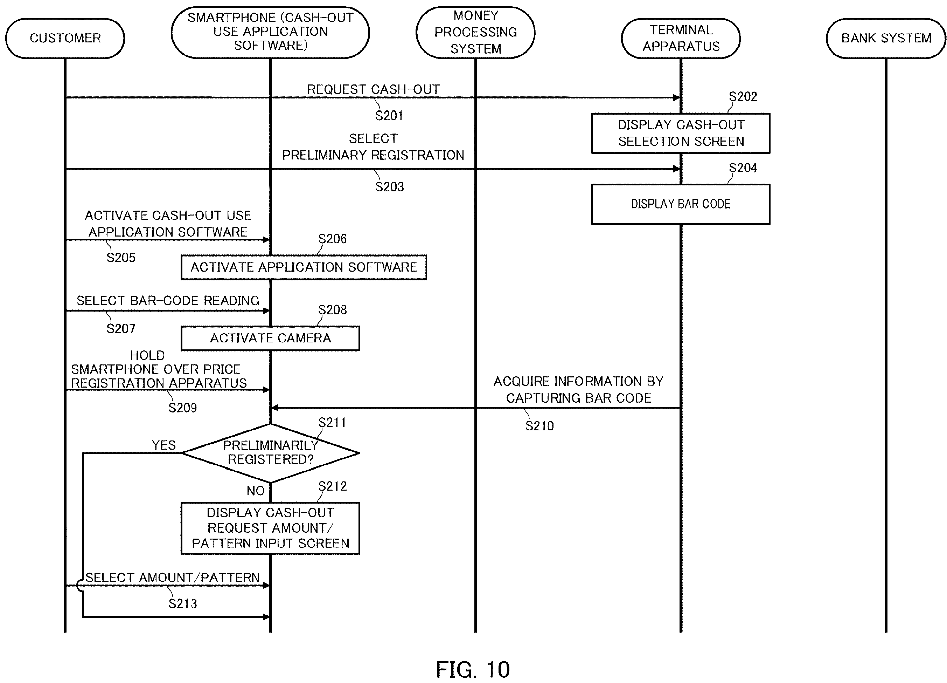

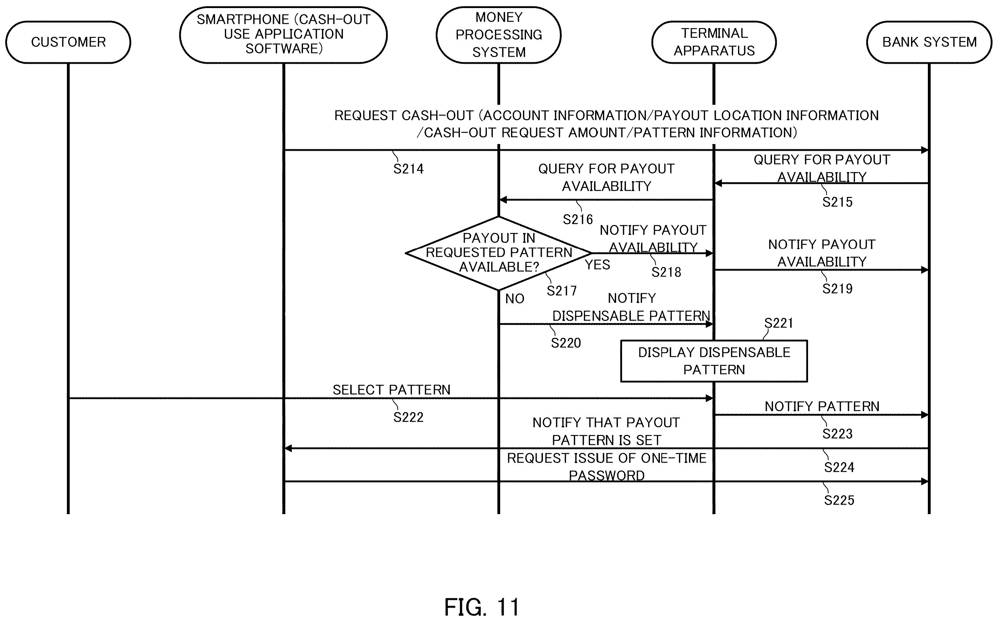

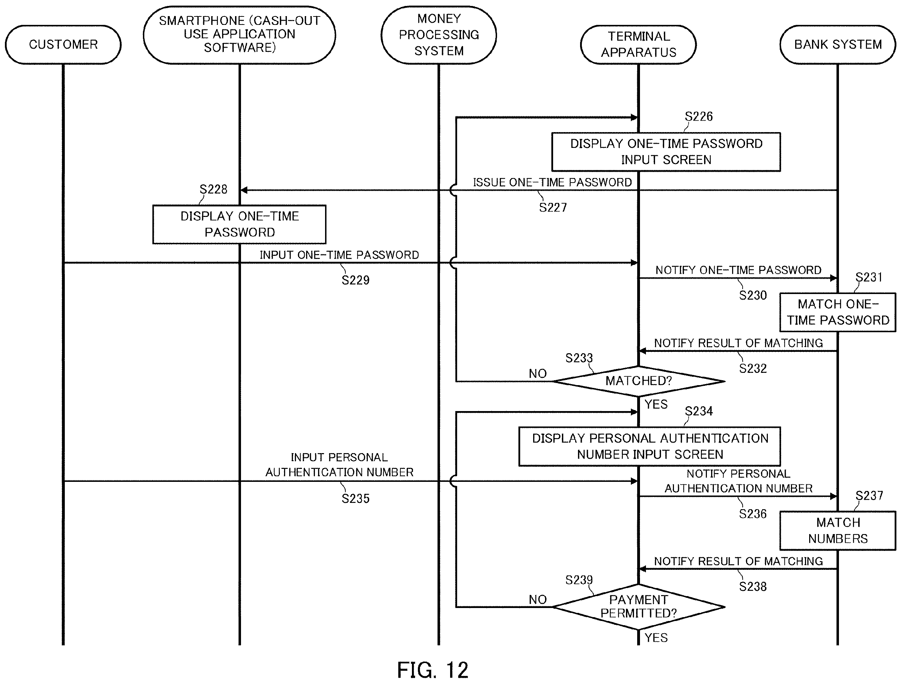

A procedure of a case where the customer who has made preliminary registration using the cash-out use application software performs cash-out with the money processing system 1 illustrated in FIG. 1 is described below with reference to FIGS. 10 to 12. Note that FIG. 11 is a continuation of FIG. 10, and FIG. 12 is a continuation of FIG. 11.

First, the customer performs S1 and S4 in FIG. 2 to perform payment for the item to be purchased. In addition, the terminal apparatus 10 executes S2 and S3 in FIG. 2. Note that the terminal apparatus 10 may execute S5 to S10 in FIG. 2.

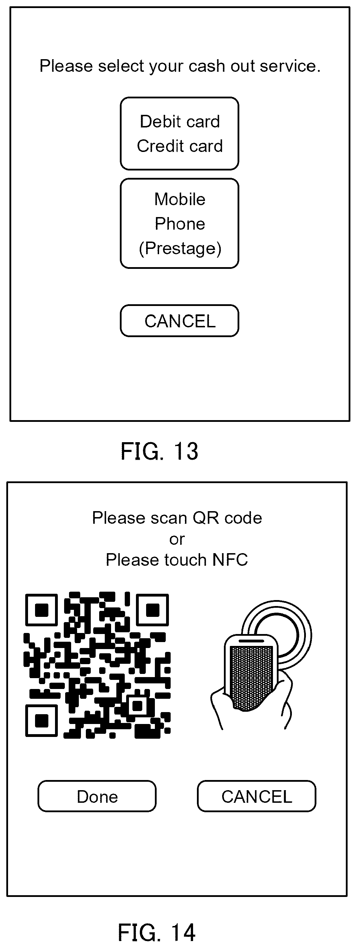

Subsequently, the customer performs the operation at S201 in FIG. 10, i.e., the operation of requesting cash-out on the terminal apparatus 10. Then, the terminal apparatus 10 displays a cash-out selection screen illustrated in FIG. 13 on the display apparatus 12 (S202).

The customer who sees the cash-out selection screen selects preliminary registration by touching the button displayed with "Mobile Phone (Prestage)" (S203).

Then, the terminal apparatus 10 displays, on the display apparatus 12, a bar code display screen (see FIG. 14) comprising a bar code that can be read with a camera function of a smartphone (S204). Note that in the case where the terminal apparatus has NFC (Near Field Communication) function, the bar code display screen may comprise an image for facilitating the use of NFC as illustrated in FIG. 14.

In addition, the customer performs an operation of touching icons of the cash-out use application software displayed on the smartphone, and the like. Specifically, the customer performs an operation of activating the cash-out use application software (S205). Then, the smartphone activates the cash-out use application software (S206). At this time, the cash-out use application software may display a screen for selecting bar-code reading or NFC as a method of acquiring information from the terminal apparatus 10. In this case, the customer selects one of them. Here, it is assumed that the customer selects the bar-code reading (S207). Then, the cash-out use application software activates the camera of the smartphone (S208).

Subsequently, the customer holds the smartphone, with the camera activated, over the terminal apparatus 10 (S209). Then, the camera of the smartphone captures the bar code displayed on the display apparatus 12 of the terminal apparatus 10, and the cash-out use application software acquires information from the bar code (S210). The information acquired at this time is information for specifying the location where the terminal apparatus 10 is installed, i.e., payout location information, for example.

Subsequently, the cash-out use application software determines whether the cash-out request amount and the combination pattern of the denominations making up the request amount has been preliminarily registered (prestaging has been made) (S211). In the case where the preliminary registration has not been made (S211 No), the cash-out use application software displays a screen for inputting the cash-out request amount and the combination pattern of the denominations making up the cash-out request amount (S212). The customer inputs the request amount and the pattern (S213).

After the information is input (after S213), or when the preliminary registration (prestaging) has been made (S211 Yes), the cash-out use application software makes a request of cash-out to the bank system(S214). At this time, the cash-out use application software transmits to the bank system the account information of the customer, the payout location information, and information about the cash-out request amount and the combination pattern of the denominations making up the cash-out request amount, for example.

When acquiring the above-mentioned information, the bank system queries the terminal apparatus 10 as to whether the required amount can be dispensed in the requested pattern (S215). Subsequently, the terminal apparatus 10 queries the money processing apparatus 20 as to whether the required amount can be dispensed in the requested pattern (S216).

In the case where it can be dispensed (S217 Yes), the money processing apparatus 20 notifies the terminal apparatus 10 that it can be dispensed (S218). Subsequently, the terminal apparatus 10 notifies the bank system that it can be dispensed (S219).

In the case where it cannot be dispensed (S217 No), the money processing apparatus 20 notifies the terminal apparatus 10 of a pattern that can be dispensed (S220). Subsequently, the terminal apparatus 10 displays the pattern that can be dispensed on the display apparatus 12 (S221). The customer who sees the display performs an operation of selecting the desired pattern (S222). Then, the terminal apparatus 10 notifies the bank system about the selected pattern (S223).

Upon receiving the notification that it can be dispensed (S219) or the notification about the selected pattern (S223), the bank system notifies the cash-out use application software that the payout pattern has been set (S224).

Upon receiving the notification that the payout pattern has been set, the cash-out use application software makes a request of issuing a one-time password to the bank system (S225).

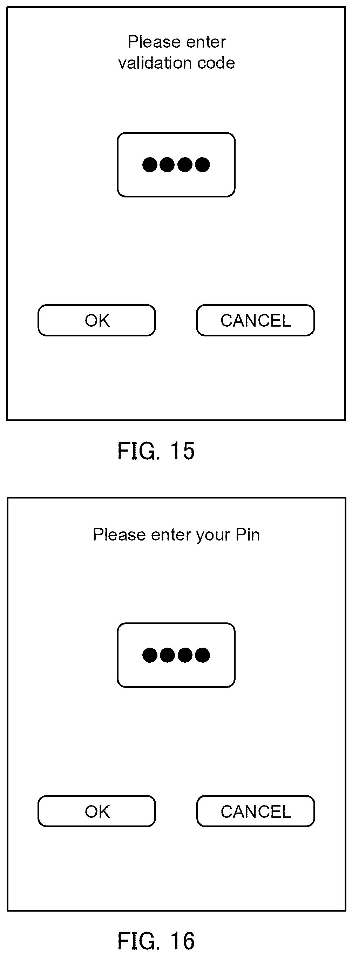

In addition, after sending the notification that it can be dispensed (S219) or the notification about the selected pattern (S223), the terminal apparatus 10 displays a one-time password input screen on the display apparatus 12 (S226). FIG. 15 illustrates an exemplary one-time password input screen.

Upon receiving the request for issuing the one-time password, the bank system issues the one-time password and transmits it to the smartphone (S227). Upon receiving the one-time password, the smartphone displays the one-time password on the display of the smartphone (S228).

The customer who sees the one-time password displayed on the display of the smartphone inputs this one-time password to the one-time password input screen displayed on the display apparatus 12 of the terminal apparatus 10 (S229). Then, the terminal apparatus 10 notifies the bank system of the input one-time password (S230).

Subsequently, the bank system matches the one-time password issued by it and the one-time password received from the terminal apparatus 10 (S231), and notifies the terminal apparatus 10 of the result of the matching (S232).

When the result of the matching indicates a mismatch (S233 No), the terminal apparatus 10 displays the one-time password input screen again on the display apparatus 12 (the process is returned to step S226).

When the result of the matching indicates a match (S233 Yes), the terminal apparatus 10 displays a personal authentication number input screen on the display apparatus 12 (S234). FIG. 16 illustrates an exemplary personal authentication number input screen. The customer who sees the screen performs an operation of inputting the personal authentication number (PIN) (S235). Then, the terminal apparatus 10 notifies the bank system of the input personal authentication number (S236).

The bank system matches the personal authentication number registered in advance and the personal authentication number received from the terminal apparatus 10 (S237), and notifies the terminal apparatus 10 of the result of the matching (S238).

When the result of the matching indicates that the payment is not permitted (S239 No), the terminal apparatus 10 again displays the personal authentication number input screen on the display apparatus 12 (the process is returned to step S234).

When the result of the matching indicates that the payment is permitted (S239 Yes), the terminal apparatus 10 proceeds to the procedure of executing the cash-out. More specifically, the payout request of S28 of FIG. 3 is made to the money processing apparatus 20. Thereafter, the procedure illustrated in illustrated in FIG. 3 is performed.

The procedure in which the customer who has made a preliminary registration with the cash-out use application software performs the cash-out is thus completed.

### Modifications

The present disclosure is not limited to the above-described embodiments, and encompasses various modifications.

For example, when operated in a store where there is no check-out counter, i.e., a so-called unattended shop, a terminal apparatus comprising the money processing system according to the present disclosure may have the following configuration. Specifically, the terminal apparatus may be composed of a plurality of cameras installed throughout the store, and a computer with an image analysis function for the images of these cameras. Such a terminal apparatus detects an item selection operation of a customer who selects items while moving in the store, i.e., an operation of putting items into the customer's bag. This item selection operation is an indication of intent to purchase. Therefore, the terminal apparatus registers the price of the selected item in linkage with the detected operation.

In this case, the terminal apparatus is configured to be able to transmit, to a mobile information apparatus such as the smartphone of the customer and the like, the information required for performing cash-out that is embedded in the bar code in the case where the total amount of the price is equal to or greater than the first threshold value and the inventory amount of the money processing apparatus is equal to or greater than the second threshold value. The customer who has made the reservation for cash-out or the preliminary registration can receive the payout of money through cash-out by scanning the bar code at the money processing apparatus installed at the exit of the store.

In addition, in the present embodiment, payment by a debit card for the price of the item or service is one of the conditions for performing cash-out. However, in the case where the bank account of the customer can be specified, the payment by a debit card is not the essential condition, and the above-mentioned money processing system may operate to perform cash-out when the customer selects payment by a cash card or credit card instead of payment by a debit card.

### Industrial Applicability

The present disclosure is applicable to distribution, finance, and other industries that handle coins.

### Reference Signs List

1, 1A Money processing system
10, 10A Terminal apparatus
11 Information input apparatus
12 Display apparatus
20, 20A Money processing apparatus
21 Information input apparatus
30 Cart

## Claims

1. A terminal apparatus (10, 10A), comprising:
a memory configured to store a first threshold value; and
a processor configured to compare a total amount of a price of at least one of an item and service and the first threshold value,
wherein when the total amount is equal to or greater than the first threshold value, the processor causes a display apparatus (12) to display a screen that indicates that cash-out is enabled, and
wherein when a request of cash-out is received, the processor instructs a money processing apparatus (20, 20A) to dispense money, wherein the processor causes the display apparatus (12) to display the screen when the total amount is equal to or greater than the first threshold value and an inventory amount of the money processing apparatus (20, 20A) is equal to or greater than a second threshold value, the second threshold value being obtained by adding a predetermined amount to a maximum amount that is specified by regulations to be withdrawable in a single cash-out.

2. The terminal apparatus (10, 10A) according to claim 1, wherein the terminal apparatus (10, 10 A) is attached to a cart (30) into which an item selected by a customer is placed.

3. A money processing system (1, 1A), comprising:
the terminal apparatus (10, 10A) according to any one of claims 1 to 2, configured to receive registration of a price of at least one of an item and service; and
the money processing apparatus (20, 20A) configured to dispense money,
wherein the terminal apparatus (10, 10A) displays the screen that indicates that cash-out is enabled when the total amount of the price of which the registration is received is equal to or greater than the first threshold value, and
wherein the terminal apparatus (10, 10A) instructs the money processing apparatus (20, 20A) to dispense money when the terminal apparatus (10, 10A) receives the request of cash-out.

4. The money processing system according to claim 3, wherein the money processing apparatus (20, 20A) comprises an information input apparatus (21) configured to input information required for performing cash-out, and is configured to dispense money through cash-out when the information is input from the information input apparatus (21).

5. The money processing system (1, 1A) according to claim 3, wherein upon receiving a command requesting information about the inventory amount of the money processing apparatus (20, 20A) from the terminal apparatus (10, 10A), the money processing apparatus (20, 20A) transmits to the terminal apparatus (10, 10A) information about an inventory amount stored in a memory provided in the money processing apparatus (20, 20A).

6. The money processing system (1, 1A) according to claim 3,
wherein when the terminal apparatus (10, 10A) receives a request of cash-out, the terminal apparatus (10, 10A) determines whether an inventory amount of the money processing apparatus (20, 20A) is equal to or greater than the second threshold value, and
wherein when the inventory amount is equal to or greater than the second threshold value, the terminal apparatus (10, 10A) instructs the money processing apparatus (20, 20A) to dispense money.

7. The money processing system (1, 1A) according to any one of claims 3 to 6, wherein the terminal apparatus (10, 10A) is configured such that when acquiring a request amount for cash-out, the terminal apparatus (10, 10A) displays a combination of denominations that is stored in the money processing apparatus (20, 20A) and is equal to the request amount.

8. A money processing method configured to be executed by a computer, the method comprising:
registering a price of at least one of an item and service;
calculating a total amount of the price registered;
displaying a screen that indicates that cash-out is enabled when the total amount is equal to or greater than a first threshold value; and
instructing a money processing apparatus (20, 20A) to dispense money when a request for cash-out is received, wherein the displaying the screen is performed when the total amount is equal to or greater than the first threshold value and an inventory amount of the money processing apparatus (20, 20A) is equal to or greater than a second threshold value, the second threshold value being obtained by adding a predetermined amount to a maximum amount that is specified by regulations to be withdrawable in a single cash-out.

## Patentansprüche

1. Terminalvorrichtung (10, 10A), umfassend:
einen Speicher, der dazu eingerichtet ist, einen ersten Schwellenwert zu speichern; und
einen Prozessor, der dazu eingerichtet ist, einen Gesamtbetrag eines Preises von mindestens einem von einem Artikel oder einer Dienstleistung mit dem ersten Schwellenwert zu vergleichen,
wobei, wenn der Gesamtbetrag gleich dem oder größer als der erste Schwellenwert ist, der Prozessor eine Anzeigeeinrichtung (12) veranlasst, einen Bildschirm anzuzeigen, der angibt, dass eine Auszahlung möglich ist, und
wobei der Prozessor, wenn eine Auszahlungsanforderung empfangen wird, eine Geldverarbeitungsvorrichtung (20, 20A) anweist, Geld auszugeben, wobei der Prozessor die Anzeigevorrichtung (12) veranlasst, den Bildschirm anzuzeigen, wenn der Gesamtbetrag gleich dem oder größer als der erste Schwellenwert ist und ein Bestandsbetrag der Geldverarbeitungsvorrichtung (20, 20A) gleich dem oder größer als ein zweiter Schwellenwert ist, wobei der zweite Schwellenwert durch Hinzufügen eines zuvor festgelegten Betrages zu einem Höchstbetrag erhalten wird, der durch Vorschriften als in einer einzelnen Auszahlung abhebbar festgelegt ist.

2. Terminalvorrichtung (10, 10A) nach Anspruch 1, wobei die Terminalvorrichtung (10, 10A) an einem Wagen (30) angebracht ist, in den ein durch einen Kunden ausgewählter Artikel gelegt wird.

3. Geldverarbeitungssystem (1, 1A), umfassend:
die Terminalvorrichtung (10, 10A) nach einem der Ansprüche 1 und 2, die dazu eingerichtet ist, eine Registrierung eines Preises von mindestens einem von einem Artikel oder einer Dienstleistung zu empfangen; und
die Geldverarbeitungsvorrichtung (20, 20A), die dazu eingerichtet ist, Geld auszugeben,
wobei die Terminalvorrichtung (10, 10A) den Bildschirm anzeigt, der angibt, dass eine Auszahlung möglich ist, wenn der Gesamtbetrag des Preises, dessen Registrierung empfangen wird, gleich dem oder größer als der erste Schwellenwert ist, und
wobei die Terminalvorrichtung (10, 10A) die Geldverarbeitungsvorrichtung (20, 20A) anweist, Geld auszugeben, wenn die Terminalvorrichtung (10, 10A) die Auszahlungsanforderung empfängt.

4. Geldverarbeitungssystem nach Anspruch 3, wobei die Geldverarbeitungsvorrichtung (20, 20A) eine Informationseingabevorrichtung (21) umfasst, die dazu eingerichtet ist, Informationen einzugeben, die für die Durchführung einer Auszahlung erforderlich sind, und dazu eingerichtet ist, Geld durch eine Auszahlung auszugeben, wenn die Informationen von der Informationseingabevorrichtung (21) eingegeben werden.

5. Geldverarbeitungssystem (1, 1A) nach Anspruch 3, wobei die Geldverarbeitungsvorrichtung (20, 20A) beim Empfangen eines Befehls, der Informationen über den Bestandsbetrag der Geldverarbeitungsvorrichtung (20, 20A) von der Terminalvorrichtung (10, 10A) anfordert, an die Terminalvorrichtung (10, 10A) Informationen über einen Bestandsbetrag sendet, der in einem in der Geldverarbeitungsvorrichtung (20, 20A) bereitgestellten Speicher gespeichert ist.

6. Geldverarbeitungssystem (1, 1A) nach Anspruch 3,
wobei, wenn die Terminalvorrichtung (10, 10A) eine Auszahlungsanforderung empfängt, die Terminalvorrichtung (10, 10A) bestimmt, ob ein Bestandsbetrag der Geldverarbeitungsvorrichtung (20, 20A) gleich dem oder größer als der zweite Schwellenwert ist, und
wobei, wenn der Bestandsbetrag gleich dem oder größer als der zweite Schwellenwert ist, die Terminalvorrichtung (10, 10A) die Geldverarbeitungsvorrichtung (20, 20A) anweist, Geld auszugeben.

7. Geldverarbeitungssystem (1, 1A) nach einem der Ansprüche 3 bis 6, wobei die Terminalvorrichtung (10, 10A) so eingerichtet ist, dass die Terminalvorrichtung (10, 10A), wenn ein Anforderungsbetrag für eine Auszahlung erfasst wird, eine Kombination von Stückelungen anzeigt, die in der Geldverarbeitungsvorrichtung (20, 20A) gespeichert ist und gleich dem Anforderungsbetrag ist.

8. Geldverarbeitungsverfahren, das dazu eingerichtet ist, durch einen Computer ausgeführt zu werden, wobei das Verfahren umfasst:
Registrieren eines Preises von mindestens einem von einem Artikel oder einer Dienstleistung;
Berechnen eines Gesamtbetrages des registrierten Preises;
Anzeigen eines Bildschirms, der angibt, dass eine Auszahlung möglicht ist, wenn der Gesamtbetrag gleich dem oder größer als ein erster Schwellenwert ist; und
Anweisen einer Geldverarbeitungsvorrichtung (20, 20A), Geld auszugeben, wenn eine Auszahlungsanforderung empfangen wird, wobei das Anzeigen des Bildschirms durchgeführt wird, wenn der Gesamtbetrag gleich dem oder größer als der erste Schwellenwert ist und ein Bestandsbetrag der Geldverarbeitungsvorrichtung (20, 20A) gleich dem oder größer als ein zweiter Schwellenwert ist, wobei der zweite Schwellenwert durch Addieren eines zuvor festgelegten Betrages zu einem Höchstbetrag erhalten wird, der durch Vorschriften als in einer einzelnen Auszahlung abhebbar festgelegt ist.

## Revendications

1. Appareil terminal (10, 10A), comprenant :
une mémoire configurée pour stocker une première valeur seuil ; et
un processeur configuré pour comparer un montant total d'un prix d'au moins l'un parmi un article ou un service et la première valeur seuil,
dans lequel lorsque le montant total est égal ou supérieur à la première valeur seuil, le processeur amène un appareil d'affichage (12) à afficher un écran qui indique que le retrait d'argent est activé, et
dans lequel, lorsqu'une demande de retrait d'argent est reçue, le processeur donne l'ordre à un appareil de traitement d'argent (20, 20A) de distribuer de l'argent, dans lequel le processeur amène l'appareil d'affichage (12) à afficher l'écran lorsque le montant total est égal ou supérieur à la première valeur seuil et qu'un montant en stock de l'appareil de traitement d'argent (20, 20A) est égal ou supérieur à une seconde valeur seuil, la seconde valeur seuil étant obtenue en ajoutant un montant prédéterminé à un montant maximum qui est spécifié par la réglementation comme pouvant être retiré en un seul retrait.

2. Appareil terminal (10, 10A) selon la revendication 1, dans lequel l'appareil terminal (10, 10A) est fixé à un chariot (30) dans lequel un article sélectionné par un client est placé.

3. Système de traitement d'argent (1, 1A), comprenant :
l'appareil terminal (10, 10A) selon l'une quelconque des revendications 1 à 2, configuré pour recevoir l'enregistrement d'un prix d'au moins l'un parmi un article ou un service ; et
l'appareil de traitement d'argent (20, 20A) configuré pour distribuer de l'argent,
dans lequel l'appareil terminal (10, 10A) affiche l'écran qui indique que le retrait d'argent est activé lorsque le montant total du prix pour lequel l'enregistrement est reçu est égal ou supérieur à la première valeur seuil, et
dans lequel l'appareil terminal (10, 10A) donne l'ordre à l'appareil de traitement d'argent (20, 20A) de distribuer de l'argent lorsque l'appareil terminal (10, 10A) reçoit la demande de retrait d'argent.

4. Système de traitement d'argent selon la revendication 3, dans lequel l'appareil de traitement d'argent (20, 20A) comprend un appareil d'entrée d'informations (21) configuré pour entrer des informations requises pour effectuer un retrait d'argent, et est configuré pour distribuer de l'argent par retrait lorsque les informations sont entrées à partir de l'appareil d'entrée d'informations (21).

5. Système de traitement d'argent (1, 1A) selon la revendication 3, dans lequel lors de la réception d'une commande demandant des informations sur le montant en stock de l'appareil de traitement d'argent (20, 20A) à partir de l'appareil terminal (10, 10A), l'appareil de traitement d'argent (20, 20A) transmet à l'appareil terminal (10, 10A) des informations concernant un montant en stock stocké dans une mémoire située dans l'appareil de traitement d'argent (20, 20A).

6. Système de traitement d'argent (1, 1A) selon la revendication 3,
dans lequel lorsque l'appareil terminal (10, 10A) reçoit une demande de retrait d'argent, l'appareil terminal (10, 10A) détermine si un montant en stock de l'appareil de traitement d'argent (20, 20A) est égal ou supérieur à la seconde valeur seuil, et
dans lequel lorsque le montant en stock est égal ou supérieur à la seconde valeur seuil, l'appareil terminal (10, 10A) donne l'ordre à l'appareil de traitement d'argent (20, 20A) de distribuer de l'argent.

7. Système de traitement d'argent (1, 1A) selon l'une quelconque des revendications 3 à 6, dans lequel l'appareil terminal (10, 10A) est configuré de manière que lorsqu'il acquiert un montant demandé de retrait d'argent, l'appareil terminal (10, 10A) affiche une combinaison de coupures qui est stockée dans l'appareil de traitement d'argent (20, 20A) et est égale au montant demandé.

8. Procédé de traitement d'argent configuré pour être exécuté par un ordinateur, le procédé comprenant :
l'enregistrement d'un prix d'au moins l'un parmi un article ou un service ;
le calcul d'un montant total du prix enregistré ;
l'affichage d'un écran qui indique que le retrait d'argent est activé lorsque le montant total est égal ou supérieur à une première valeur seuil ; et
le fait de donner l'ordre à un appareil de traitement d'argent (20, 20A) de distribuer de l'argent lorsqu'une demande de retrait d'argent est reçue, dans lequel l'affichage de l'écran est effectué lorsque le montant total est égal ou supérieur à la première valeur seuil et qu'un montant en stock de l'appareil de traitement d'argent (20, 20A) est égal ou supérieur à une seconde valeur seuil, la seconde valeur seuil étant obtenue en ajoutant un montant prédéterminé à un montant maximum qui est spécifié par la réglementation comme pouvant être retiré en un seul retrait.
